# FASCICULE DE BREVET EUROPEEN

(11) **EP 2 145 426 B1**
(45) Date de publication et mention de la délivrance du brevet: **19.09.2018**
(21) Numéro de dépôt: 08787914.4
(22) Date de dépôt: 04.04.2008
(51) Int. Cl.: H04L 12/66, G06F 8/70, G07C 5/00, H04L 29/06, H04M 3/22, H04M 7/00, H04L 12/58, H04L 12/24, H04B 7/185, H04M 3/24, H04L 29/08

(54) **SYSTEME DE COMMUNICATION ENTRE UN RESEAU D'ORDINATEURS DANS UN AERONEF ET UN RESEAU D'ORDINATEURS AU SOL**
SYSTEM ZUR AKTIVIERUNG DER KOMMUNIKATION ZWISCHEN EINEM FLUGZEUGCOMPUTERNETZWERK UND EINEM BODENCOMPUTERNETZWERK
SYSTEM ENABLING COMMUNICATION BETWEEN AN AIRCRAFT-BASED COMPUTER NETWORK AND A GROUND-BASED COMPUTER NETWORK

(30) Priorité: 06.04.2007 FR 0754396
(43) Date de publication de la demande: 20.01.2010
(73) Titulaire: Airbus, 31707 Blagnac (FR)
(72) Inventeur: SAUGNAC, Frédéric, F-31320 Auzeville Tolosane (FR)
(74) Mandataire: Santarelli
(86) Numéro de dépôt international: PCT/FR2008/000475
(87) Numéro de publication internationale: WO 2008/139060

(56) Documents cités:
- WO-A-2007/117285
- US-A1- 2003 003 872
- US-A1- 2004 167 967
- US-A1- 2005 256 616
- US-A1- 2006 052 921
- US-A1- 2007 010 236

## Description

La présente invention concerne un système de communication entre un réseau d'ordinateurs dans un aéronef et un réseau d'ordinateurs au sol, un réseau d'ordinateurs d'aéronef et un réseau d'ordinateurs au sol.

Un système avionique comprend aujourd'hui un ensemble d'outils et de bases de données embarqués de manière notamment à informatiser les outils, notamment les outils de diagnostic, de maintenance, et les documents, tels que les manuels de diagnostic de pannes ou les manuels d'opérations de l'avion. Les outils sont donc par exemple à présent mis en oeuvre par des logiciels ou des bases de données.

Principalement, deux types de maintenance peuvent être considérés.

Tout d'abord, il est considéré la maintenance qui a lieu soit dans la base principale de maintenance de l'avion soit en dehors de cette base, consistant en des actions limitées à la régulation, la sécurité et la nécessité de faire voler, aussi appelé dispatcher, l'avion sans délai ou dans un délai limité.

Ensuite, il est considéré la maintenance réalisée dans la base principale de maintenance de l'avion pour lequel des actions additionnelles de maintenance sont réalisées telles que la maintenance intervenant à intervalles réguliers.

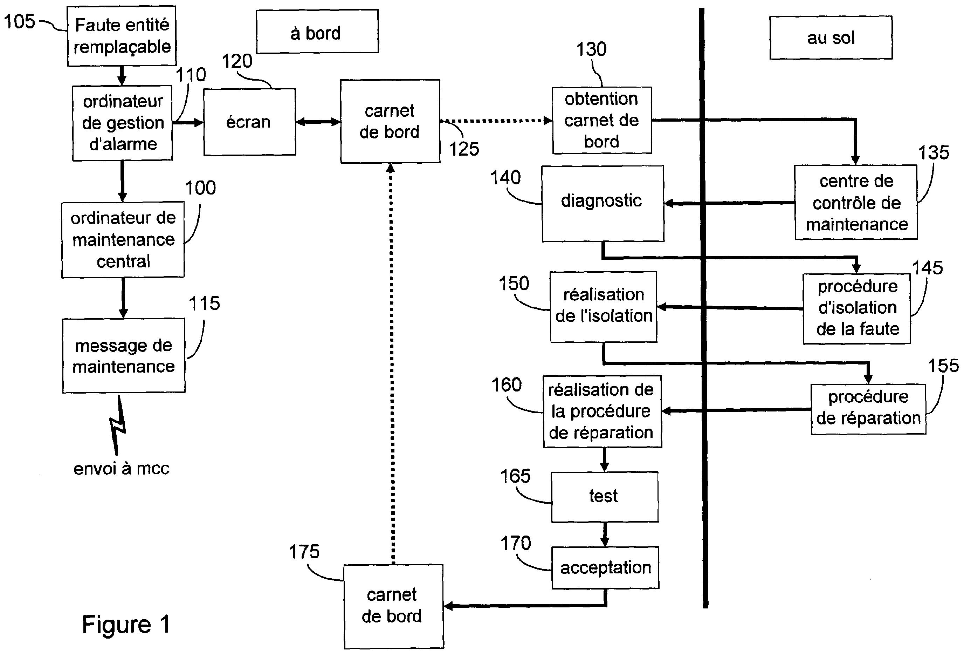

Il est illustré en figure 1, un diagramme des opérations de maintenance réalisées dans l'avion et dans la base au sol de maintenance selon une solution connue.

La maintenance s'appuie sur un système, notamment un ordinateur de maintenance central 100 (« Central Maintenance Computer» en terminologie anglo-saxonne), qui collecte, consolide et rapporte les fautes des entités remplaçables de l'avion LRU 105 (« Line Replacable Unit» en terminologie anglo-saxonne) afin d'aider l'équipe de vol et le personnel de maintenance dans les procédures de maintenance.

Les fautes des entités remplaçables de l'avion 105 font l'objet de gestion d'alarmes par un ordinateur 110.

L'ordinateur de maintenance central 100 émet à destination de la compagnie de rattachement de l'avion, notamment à destination du centre de contrôle de maintenance MCC (acronyme de « Maintenance Control Center » en terminologie anglo-saxonne), un message de maintenance 115.

Un écran 120 est relié à l'ordinateur de gestion d'alarmes 110 afin d'afficher les fautes des entités remplaçables de l'avion 105.

L'ensemble des fautes ou événements arrivant durant une rotation de l'avion est mémorisé dans un carnet de bord 125 appelé « logbook » en terminologie anglo-saxonne. Ce carnet de bord lié à l'avion est rempli soit par les pilotes (« technical logbook » en terminologie anglo-saxonne) soit par l'équipage de cabine (« Cabin Logbook » en terminologie anglo-saxonne).

Pour ce faire, l'équipage inscrit manuellement les fautes intervenues sur le carnet de bord 125 ainsi que les conditions de vol dans lesquelles les fautes sont intervenues.

Lorsque l'avion est au sol, le carnet de bord est récupéré 130 dans l'avion afin d'être lu au sol par le centre de contrôle de maintenance MCC 135. Ensuite, un technicien de maintenance se rend dans l'avion afin d'analyser les fautes relevées et d'effectuer un diagnostic 140.

Le technicien se rend ensuite à la base au sol de maintenance afin d'obtenir la procédure d'isolation de la faute 145.

Avec cette procédure, aussi appelée TSM (acronyme de « Troubleshooting manuel » en terminologie anglo-saxonne), le technicien se rend de nouveau dans l'avion afin d'exécuter cette procédure d'isolation des fautes 150.

A l'issue de l'isolation des fautes, le technicien retourne à la base au sol afin d'obtenir la procédure de réparation 155 et éventuellement commander une pièce de remplacement au magasin de rechanges.

Ensuite le technicien de maintenance retourne une nouvelle fois dans l'avion afin d'exécuter la procédure de réparation 160.

Ensuite, des tests 165 sont réalisés afin de vérifier le fonctionnement à l'issue de la réparation et une procédure d'acceptation 170 est effectuée consistant à déclarer l'avion comme étant apte à voler.

Enfin, cette acceptation est inscrite au carnet de bord 175.

Comme on le comprendra aisément à la lecture de ce qui précède, ce mode opératoire de maintenance a un coût élevé, et mobilise l'avion au sol un temps considérable.

Une autre solution connue consiste à mémoriser dans des supports de mémorisation embarqués (bases de données) l'ensemble des procédures d'isolation des fautes et l'ensemble des procédures de réparation permettant de supprimer les allers-retours du technicien de maintenance entre l'avion et la base au sol de maintenance.

L'ensemble des procédures d'isolation des fautes et l'ensemble des procédures de réparation représentent toutefois un gros volume de données, pouvant attendre plusieurs giga octets de données.

L'ensemble des outils, des données et des documents doit en outre être régulièrement mis à jour afin que l'équipage de l'avion, et plus particulièrement le pilote et le technicien de maintenance, bénéficie de la dernière version des outils et des documents.

Pour ce faire, les outils et la documentation sont chargés dans le ou les ordinateurs de l'avion par un technicien en charge de maintenir à jour ces outils et documents (ou synchroniser les bases de données embarquées contenant ces documents avec des bases de données au sol). Celui-ci est muni, par exemple, d'un ordinateur portable comprenant en mémoire la dernière version des outils et des données et se rend dans l'avion afin de réaliser le chargement et la mise à jour des outils et des données.

Toutefois, étant donné que ces outils et la documentation représentent un grand volume de données, à savoir plusieurs giga-octets, cette mise à jour est longue et peut nécessiter d'immobiliser l'avion durant un temps relativement long.

Il en est de même si le technicien utilise un ordinateur portable ayant une connexion radio Wifi avec lequel il charge les données et qu'il met à jour les outils et les données mémorisées dans le réseau de l'avion à partir des données chargées sur son ordinateur portable.

De plus, une compagnie aérienne dispose classiquement d'un grand parc d'avions ce qui se traduit par un coût élevé de maintenance des outils et des documents des avions de son parc ainsi qu'une gestion de configuration importante des données aux sols destinées à être chargées à bord des avions.

Ainsi, le maintien à jour d'un tel volume est rendu difficile. Cela a pour conséquence que le technicien de maintenance, s'appuyant sur ces procédures mémorisées dans l'avion, peut obtenir des informations concernant les procédures d'isolation et de réparation à suivre qui peuvent ne plus être à jour, voire erronées. En outre, lorsque les données de résolution de problèmes sont à bord, cela n'évite pas au technicien de maintenance le besoin d'être mis en relation avec le magasin des pièces de rechange.

Des systèmes de communication entre un réseau d'ordinateurs dans un aéronef et un réseau d'ordinateurs sont connus des brevets ou demandes de brevets suivants: US2007/01 0236 A1, US2003/003872 A1, US2006/052921 A1, US2004/167967 A1, US2005/256616 A1, US6115656, EP1426870 A2, US2004/039499 A1 de même que de WO2007/117285 A2 publié le 18 octobre 2007.

La présente invention a pour objet de remédier à au moins un des inconvénients des techniques et processus de l'art antérieur précité. Pour ce faire, l'invention propose un système de communication entre un réseau d'ordinateurs dans un aéronef et un réseau d'ordinateurs au sol, permettant notamment la réduction des coûts de maintenance, le retour rapide de l'avion en fonctionnement, la mise à jour des données et des outils de l'aéronef de manière sécurisée sans nécessiter l'intervention d'un technicien.

L'invention a ainsi pour objet un système de communication selon la revendication 1.

Selon l'invention, au moins un système avionique est connecté en temps réel et de façon continue avec une infrastructure au sol. Au moins un outil informatique est partagé entre l'infrastructure sol et le système avionique à bord. Cet outil donne accès au sol, au bord et au réseau, et permet de réaliser des actions à distance entre le sol et le bord. Il est utilisable par un opérateur unique installé à un endroit fixe.

Une opération de maintenance et une mise à jour simultanée des bases de données sol et bord peuvent être réalisées en une seule fois de façon synchronisée et coordonnée, grâce à l'utilisation de l'outil informatique partagé. L'opération de maintenance peut inclure un test et une consultation de la documentation avion,

Le système implique une seule opération de maintenance coordonnée en temps réel entre le sol et le bord. Elle implique une seule suite d'opérations coordonnées en temps réel entre le sol et le bord et permet d'identifier, de réparer et de suivre (tracer) dans les bases de données les actions effectuées.

La communication peut se faire par protocole IP sécurisé par exemple. La coordination et la synchronisation des bases de données se fait en temps réel.

L'avion peut être en vol et l'opérateur au sol peut faire un essai système pendant le vol.

Alternativement l'avion peut être au sol, l'opérateur à bord ou au sol au centre de maintenance.

L'invention fournit un système de communication entre un réseau d'ordinateurs dans un aéronef et un réseau d'ordinateurs au sol par l'établissement d'une connexion réseau selon un mode de communication synchrone afin de créer une continuité du réseau de l'aéronef avec le réseau d'ordinateurs au sol.

En outre, ce système permet la mise à jour de données mémorisées dans le réseau d'ordinateurs dans l'aéronef vers le réseau d'ordinateurs au sol et vice versa.

De plus, conformément à l'invention, il est permis de faire de la navigation interactive dans les données mémorisées dans l'infrastructure au sol ainsi que dans des sites documentaires contenant de la documentation avion (TSM ou autre) par exemple.

Il n'y a pas besoin de vérification, ou d'opération de synchronisation de bases de données entre le sol et le bord. Le système offre la possibilité d'exécuter des opérations au sol depuis le bord (outils partagés sol/bord), ou à bord depuis le sol, grâce à la communication synchrone.

Le support de communication est par exemple un réseau de téléphonie mobile, un réseau de communication sans fil, un réseau satellite et / ou une liaison filaire.

Selon une caractéristique, le système comprend des moyens de mise à jour des données mémorisées dans le réseau d'ordinateurs de l'aéronef à partir de données mémorisées dans le réseau d'ordinateurs au sol.

Selon une autre caractéristique, le système comprend des moyens d'émission de données mémorisées dans le réseau d'ordinateurs d'aéronef sur le réseau d'ordinateurs au sol.

Selon un mode de réalisation, le réseau d'ordinateurs dans l'aéronef et le réseau d'ordinateurs au sol sont connectés par un réseau privé virtuel.

La présente invention a également pour but de fournir un réseau d'ordinateurs d'aéronef selon la revendication 7.

Ce dispositif présente les mêmes avantages que le système de communication brièvement décrit ci-dessus.

La présente invention a également pour but de fournir un réseau d'ordinateurs au sol selon la revendication 8.

Ce dispositif présente les mêmes avantages que le système de communication brièvement décrit ci-dessus.

D'autres avantages, buts et caractéristiques de la présente invention ressortent de la description détaillée qui suit, faite à titre d'exemple non limitatif, au regard des dessins annexés dans lesquels :
- la figure 1 illustre des opérations de maintenance réalisées dans l'avion et dans la base au sol de maintenance selon l'état de la technique ;
- la figure 2 illustre une vue globale du système dans lequel est mise en oeuvre l'invention ;
- la figure 3 illustre une mise en oeuvre possible dans l'infrastructure de bord de connexion avec l'infrastructure au sol conformément à l'invention ;
- la figure 4 illustre des opérations de maintenance réalisées dans l'avion et dans la base au sol de maintenance conformément à l'invention ;
- la figure 5 représente une mise en oeuvre du serveur de liaison dans un avion conformément à l'invention ;
- la figure 6 illustre un mode de réalisation de l'établissement d'un réseau privé virtuel selon l'invention ; et
- la figure 7 illustre différents réseaux privés virtuels entre un serveur d'un avion et un serveur au sol conformément à l'invention.

Conformément à l'invention, il est installé dans l'avion, un système de maintenance électronique apte à réaliser les opérations de maintenance de manière notamment à remplacer le processus papier par un processus électronique.

Ce système de maintenance s'appuie sur une infrastructure de bord dans un avion, c'est-à-dire un système avionique comprenant notamment un ensemble d'entités fonctionnelles de l'avion, par exemple des entités remplaçables de l'avion, hébergeant des applications pour l'équipage et la maintenance, une infrastructure au sol pour préparer, personnaliser et gérer les données devant être utilisées à bord par exemple pour réaliser des opérations de maintenance ou obtenir des données de l'avion pour être utilisées au sol et une infrastructure de connexion pour échanger des données entre l'infrastructure au sol et l'infrastructure de bord et pour mettre à jour les outils et les données mémorisées dans l'infrastructure de bord.

L'infrastructure au sol est par exemple, présente dans la base de maintenance de la compagnie aérienne de rattachement de l'avion.

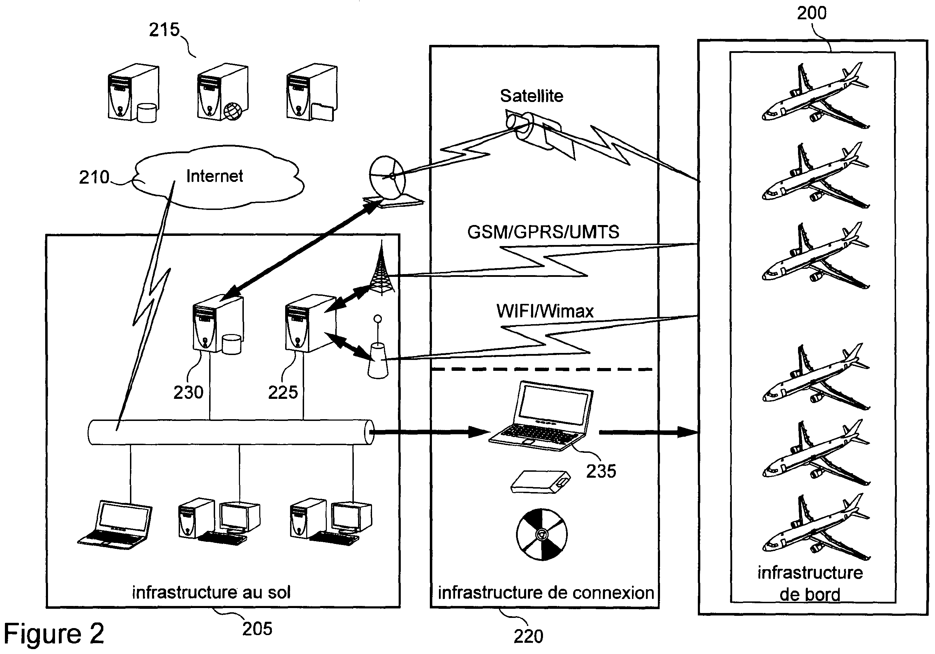

La figure 2 illustre une vue globale du système utilisé dans l'invention.

Ainsi, il est représenté un ensemble d'avions 200 (infrastructures de bord) d'une compagnie aérienne et une infrastructure au sol 205 de cette compagnie. Cette infrastructure au sol comprend notamment un ensemble d'unités de traitement interconnectées via un réseau de télécommunication. Ce réseau comprend également une connexion 210, par exemple une connexion Internet afin d'être connecté aux serveurs des constructeurs d'avion ou à tout tiers 215.

L'infrastructure au sol est également connectée via un réseau de communication 220 (infrastructure de connexion) au réseau avionique des avions. Le réseau de communication 220 s'appuie par exemple sur un support de communication sans fil, par exemple WIFI ou Wimax, un support de communication de téléphonie mobile par exemple GSM / GPRS ou UMTS ou un support de communication satellite. En outre, l'avion peut être raccordé au sol par une liaison filaire en cas de dépannage en cas d'indisponibilité de la communication radio.

Ainsi le réseau de l'infrastructure au sol comprend notamment un serveur 225 apte à émettre des données à un avion et à recevoir des données d'un avion par satellite, et un serveur 230 apte à émettre des données à un avion et à recevoir des données d'un avion en utilisant un support de communication sans fil ou de téléphonie mobile.

En outre, il peut être utilisé un support portable 235, tel qu'un ordinateur portable, une clé USB (« Universal Serial Bus » en terminologie anglo-saxonne), un CD / DVD, afin d'échanger des données avec l'avion.

Ainsi, conformément à l'invention, l'infrastructure de l'avion est un réseau mobile apte à communiquer avec l'infrastructure au sol de la compagnie de rattachement de sorte à créer une continuité entre l'infrastructure de bord et l'infrastructure au sol.

Selon un mode de réalisation particulier, l'infrastructure de bord communique avec l'infrastructure au sol selon un mode de communication synchrone, ce type de communication permettant de faire de la navigation interactive des sites documentaires contenant la documentation avion par exemple.

La communication synchrone consiste à établir un lien ou canal de communication entre le système avionique et l'infrastructure au sol, dédié à la communication entre eux c'est-à-dire qu'il est disponible lorsque par exemple on veut consulter des données dans l'infrastructure au sol depuis l'aéronef ou on veut obtenir des informations mémorisées dans l'infrastructure au sol.

Ainsi, il n'est pas nécessaire d'établir le lien ou canal de communication à chaque fois que l'on veut réaliser une communication.

Par conséquent la communication entre l'aéronef et l'infrastructure au sol est assurée dès lors que l'on n'est pas tributaire d'avoir ou pas une disponibilité du canal.

L'infrastructure de l'avion devenant une continuité de l'infrastructure au sol, il est possible de réaliser des mises à jour et des opérations de maintenance de manière synchrone entre le sol et le bord.

De plus, la communication peut être initiée via l'infrastructure de bord ou via l'infrastructure au sol.

Conformément à l'invention, le réseau de communication 220 reliant l'infrastructure de bord d'un avion et l'infrastructure au sol permet, non plus d'embarquer tous les outils et données logicielles à bord, mais seulement les outils essentiels, les autres données pouvant être consultées par connexion quand cela est nécessaire. Ainsi, un technicien de maintenance, dans l'avion, peut accéder aux données mémorisées dans l'infrastructure au sol permettant de réaliser les opérations de maintenances, sans faire des allers-retours entre l'avion et la base de maintenance.

En outre, le technicien de maintenance, dans l'avion, peut réaliser des mises à jour des outils et des données mémorisées dans l'infrastructure de l'avion.

En outre, le technicien de maintenance peut mettre à jour les outils et les données dans l'avion depuis le sol, opération aussi appelée mise à jour distante (« remote update » en terminologie anglo-saxonne). Par exemple, le technicien de maintenance peut mettre à jour à l'issue de la maintenance le statut du carnet de bord de l'avion.

De la même façon, le pilote ou l'opérateur de maintenance peut consulter les serveurs du sol en temps réel afin d'avoir accès à l'ensemble des serveurs de la compagnie de rattachement de l'avion et mettre simultanément à jour les données et outils à bord, opération aussi appelé opérations distantes (« remote opérations » en terminologie anglo-saxonne).

Enfin, un technicien au sol peut commander la réalisation de tests sur le système avionique préalablement à la réalisation des opérations de maintenance par l'émission de commandes via le réseau de communication 220. Ainsi, il est rendu possible pour le technicien de maintenance, par exemple, préalablement à l'atterrissage de l'avion, d'effectuer des tests en vue d'identifier les entités remplaçables de l'avion dysfonctionnant.

Selon un mode de réalisation particulier, il est créé, sur un support de communication entre l'infrastructure de bord et l'infrastructure au sol, notamment sur un réseau sans fils ou sur un réseau de téléphonie mobile, un protocole d'encapsulation aussi appelé tunnelisation (« *tunneling »* en terminologie anglo-saxonne), apte à encapsuler les données à transmettre de façon chiffrée. Ce réseau créé est appelé réseau privé virtuel (noté *RPV* ou VPN, acronyme de « *Virtual Private Network* »). Ce réseau est dit virtuel car il relie deux réseaux physiques par un support de communication non nécessairement fiable, et privé car seuls les ordinateurs des réseaux de part et d'autre du réseau privé virtuel peuvent accéder aux données. De plus, il permet la sécurisation des échanges sur le support de communication non nécessairement fiable.

De cette manière, une liaison sécurisée à moindre coût est créée.

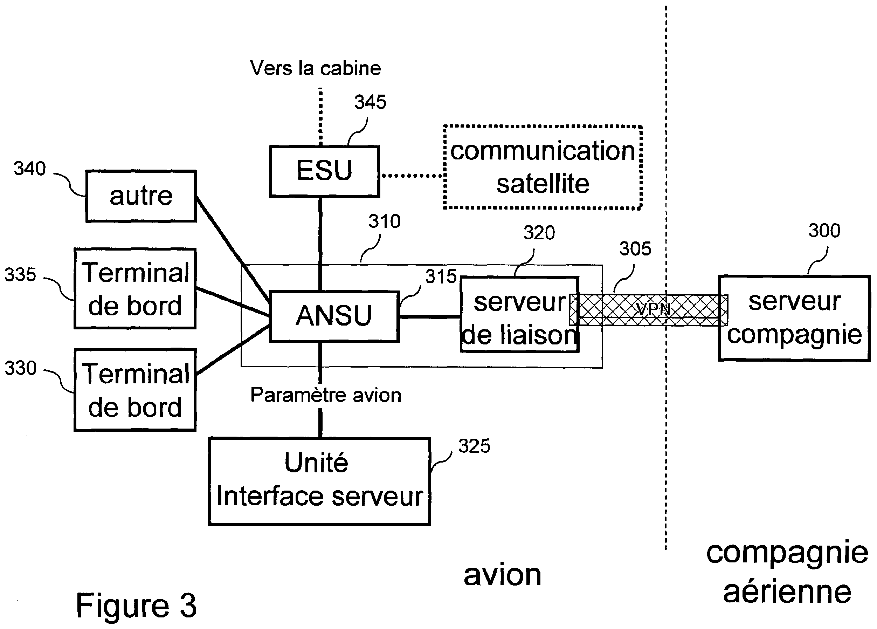

Il est illustré en figure 3, une mise en oeuvre possible de ce système conformément à l'invention.

Selon cette mise en oeuvre, un serveur hors avion 300, ici au sol, de la compagnie aérienne, est connecté à un serveur de liaison 320 de l'infrastructure à bord de l'avion via un réseau virtuel 305. Le serveur de l'avion 310 comprend un serveur réseau ANSU (« Aircraft Network Server Unit » selon la terminologie anglo-saxonne) 315 connecté aussi au serveur de liaison 320.

Au serveur ANSU 315, sont connectés, notamment une unité d'interface serveur 325, différents terminaux de bords 330, 335, 340 au moyen d'une unité de routage réseau électronique ESU (« Ethernet Switch Unit » selon la terminologie anglo-saxonne) 345.

Selon un mode de réalisation particulier de l'invention, l'unité de stockage électronique est connectée à un réseau satellite de type Satcom, ce dernier étant apte à être lui-même connecté au serveur de la compagnie aérienne.

Le serveur de liaison 320 est apte à être connecté via une connexion réseau, par exemple un réseau privé virtuel, à un serveur 300 de la compagnie aérienne en utilisant différents supports de communication, notamment le réseau de téléphonie mobile par exemple, le réseau GSM (« Global System for Mobile Communications » selon la terminologie anglo-saxonne) / EDGE / UMTS (« Universal Mobile Telecommunications System » en terminologie anglo-saxonne) / HSDPA (« *High Speed Downlink Packet Access* » en terminologie anglo-saxonne) ou un réseau sans fil, par exemple le réseau WIFI 802.11 a/b/g ou un réseau satellite par exemple le réseau HSD (« high speed data Satcom» en terminologie anglo-saxonne).

De la sorte, le réseau d'ordinateurs de l'avion est connecté au réseau d'ordinateurs au sol de la compagnie aérienne de rattachement de l'avion.

Lors de l'établissement d'une connexion réseau entre le réseau d'ordinateurs de l'avion et le réseau d'ordinateurs au sol, un support est sélectionné parmi la pluralité de supports de communication disponibles, notamment en fonction de la disponibilité des supports de communication ou du débit des supports de communication.

Les serveurs 300 et 330 encapsulent et décapsulent alors les données via des mécanismes de chiffrement et de cryptage.

Ces supports de communication sont aptes à fournir un débit élevé de sorte à permettre la transmission de grosses masses de données entre l'infrastructure au sol et l'infrastructure de bord de l'avion dans un temps raisonnable, et notamment permettre de charger, de l'infrastructure au sol de la compagnie aérienne aux ordinateurs de l'avion, les dernières versions des outils, des données et des documents, l'opération de chargement pouvant être commandée par un technicien à bord de l'avion ou par un technicien au sol depuis l'infrastructure au sol.

Aussi, il est possible à un technicien de maintenance à bord de l'avion d'avoir accès aux données de maintenance et aux outils centraux de gestion de l'information de la compagnie aérienne (« maintenance information server » en terminologie anglo-saxonne ou « Flight Ops Information server ») mémorisées dans l'infrastructure au sol.

En outre, ce type de connexion permet, à partir de l'avion d'atteindre grâce aux connexions Internet, des serveurs reliés à l'infrastructure au sol de la compagnie aérienne comme le server du constructeur de l'avion ou de certains équipements majeurs constituants l'avion ou sa cabine.

En outre, selon cette architecture, il est possible à un technicien de maintenance à bord de l'avion d'avoir accès à des fournisseurs pour, par exemple consulter des données de vols ou des documentations de maintenance ou de se connecter aux entreprises de services au sol qui supportent les opérations de maintenance de l'avion.

Au moyen d'une telle architecture, la maintenance d'un avion consistant à dépanner, maintenir un avion en bon état de vol et à réparer un avion est réalisée dans des temps les plus courts possibles et de façon optimisée puisque tous les outils au sol de maintenance de l'avion sont mis à jour notamment au moment de l'autorisation de dispatcher l'avion.

En outre, conformément à l'invention, la maintenance électronique permet de dépanner et maintenir un avion en bon état de vol à tout moment et quelle que soit sa localisation.

Pour ce faire, on charge dans l'avion, un minimum de données d'information, tel que l'outil de diagnostic, le carnet de bord électronique, la liste d'équipement minimum MEL (« Minimum Equipment List » en terminologie anglo-saxonne), voire un sous-ensemble de ces données.

Puis, par l'intermédiaire du réseau de communication 220, le technicien de maintenance à bord de l'avion va accéder par une connexion appelée connexion distante (« *remote access* » en terminologie anglo-saxonne), notamment sécurisée par exemple aux données présentes dans l'infrastructure au sol de la compagnie, tel que le manuel de réparation TSM, le manuel de maintenance AMM (acronyme de « *Aircraft Maintenance Manual »* en terminologie anglo-saxonne) ou l'IPC (acronyme de « Identification Part Catalogue» en terminologie anglo-saxonne) qui permet d'identifier la référence d'une pièce à changer et de la commander au magasin de rechange.

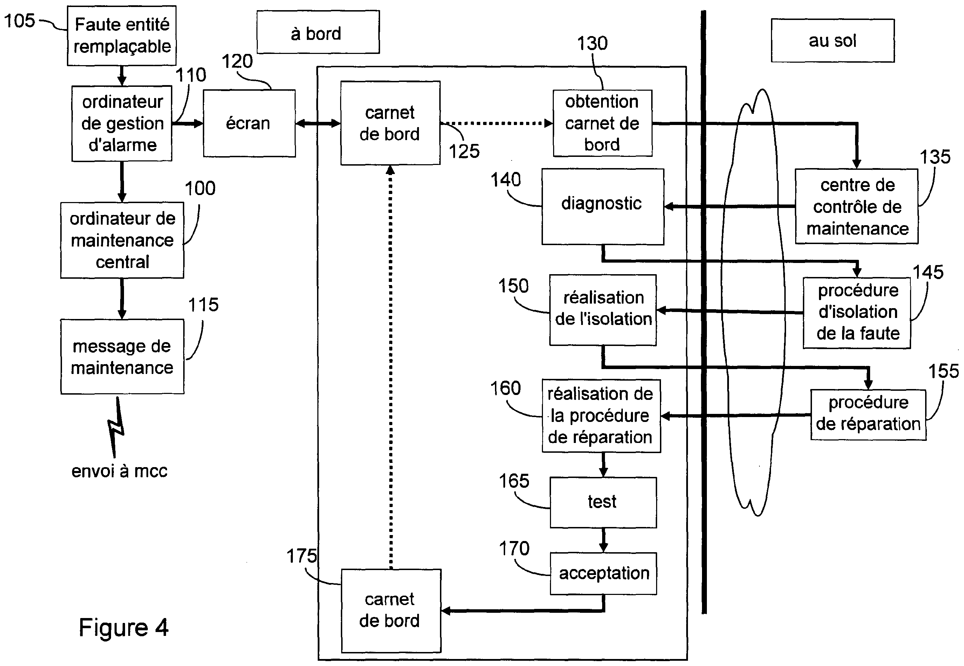

De la sorte, le technicien dispose via le réseau de communication 220, notamment par l'utilisation d'un canal sécurisé de type VPN, d'un accès aux manuels mémorisés dans l'infrastructure au sol, ces manuels étant les dernières versions, tel qu'illustré en figure 4, limitant de la sorte les allers-venus du technicien de maintenance entre l'avion et l'infrastructure au sol de maintenance.

Ainsi, tel qu'illustré en Figure 4, où les références déjà citées en référence à la Figure 1 sont reprises, le technicien à bord de l'avion va au moyen de commandes distantes, notamment de commandes de consultation, accéder à la procédure d'isolation de la faute, aussi appelé dysfonctionnement, diagnostiquée 145, ainsi qu'à la procédure de réparation de la faute isolée 155 et éventuellement au magasin de pièces de rechange, via le support de communication 220.

Selon un mode de réalisation particulier, cette connexion réseau est une connexion synchrone.

Selon un autre mode de réalisation, un technicien au sol peut, préalablement à l'arrivée de l'avion au sol, émettre des commandes, via le réseau de communication 220, à l'infrastructure de bord afin de réaliser un certains nombre de tests de manière à diagnostiquer, isoler et réparer les fautes au plus vite.

Selon un mode de réalisation, les outils, notamment les outils de diagnostic, et des données peuvent être chargés dans l'infrastructure de bord dans l'avion, via le réseau de communication 220, celui-ci étant apte à réaliser des échanges entre l'infrastructure de bord et l'infrastructure au sol selon un moyen de communication haut débit.

Pour ce faire, il peut être mis en place un réseau de communication 220 apte à communiquer entre le serveur de liaison 320 et le serveur de la compagnie 300 selon un réseau de téléphonie mobile et / ou selon un réseau de communication sans fil, notamment par l'utilisation d'un canal sécurisé de type VPN.

Selon un exemple de scénario, on prend connaissance d'une faute d'un équipement grâce à la mémorisation de la faute dans la carnet de bord (logbook). Un opérateur au sol se connecte à l'avion depuis le centre de maintenance (mcc) au sol.

Le résultat de l'essai concluant que la faute de l'équipement est par exemple un « spurious message » (message parasite), l'opérateur peut, toujours depuis son bureau, décider que l'équipement est opérationnel, et donner un statut « OK » à bord de l'avion (mise à jour de la base à bord) en même temps qu'il met à jour la base de données sol.

Il n'existe qu'un seul outil sol/bord permettant la maintenance de l'avion. Il s'agit d'un outil utilisable depuis l'avion ou depuis le centre de maintenance.

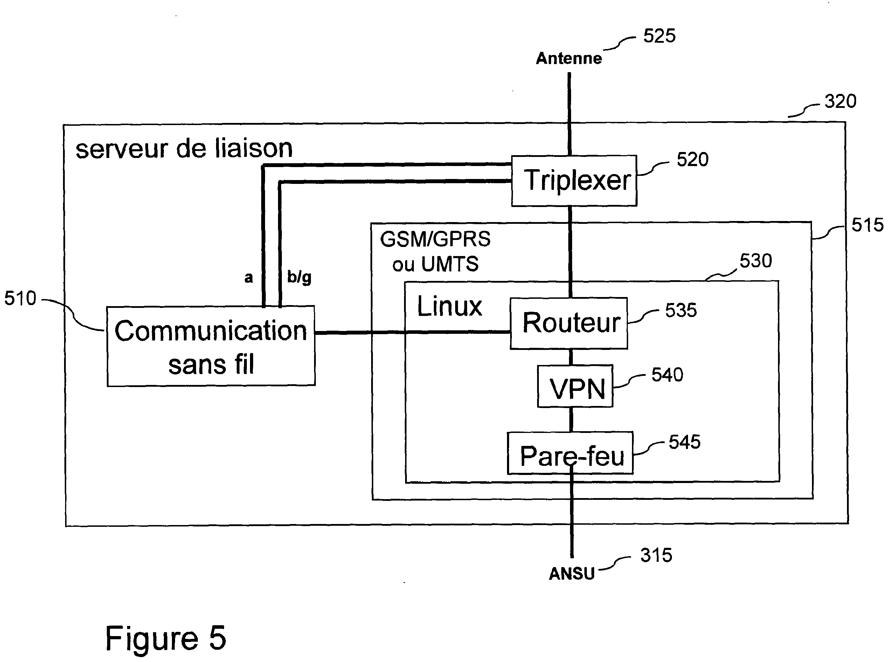

Il est maintenant illustré en figure 5, une architecture de mise en oeuvre du serveur de liaison 320 dans l'avion apte à communiquer selon un réseau de téléphonie mobile et selon un réseau de communication sans fil.

Le serveur de liaison 320 comprend un module de communication sans fil TWLU 510 (« Terminal Wireless LAN Unit » selon la terminologie anglo-saxonne) apte à communiquer selon par exemple les normes WIFI a/b/g ou Wlmax et un module de téléphonie mobile 515 tel qu'un module GSM/GPRS ou UMTS, ces deux modules étant connectés à un module triplexer 520 relié à une antenne 525.

Sur le module de téléphonie mobile 515, est installé un système d'exploitation 530, sur lequel est présent un routeur 535 apte à router la communication soit vers le module de communication sans fil TWLU 510 soit vers le module triplexer 520 directement de sorte à utiliser le protocole de téléphonie mobile.

La communication du serveur de l'avion avec le serveur de la compagnie aérienne est gérée par un module VPN 540.

En outre, un module pare-feu (« firewall » selon la terminologie anglo-saxonne) 545 est installé en amont du module VPN 540, entre les données provenant du serveur réseau ANSU 315 et le module VPN 540 de manière à protéger le serveur 315 des intrusions.

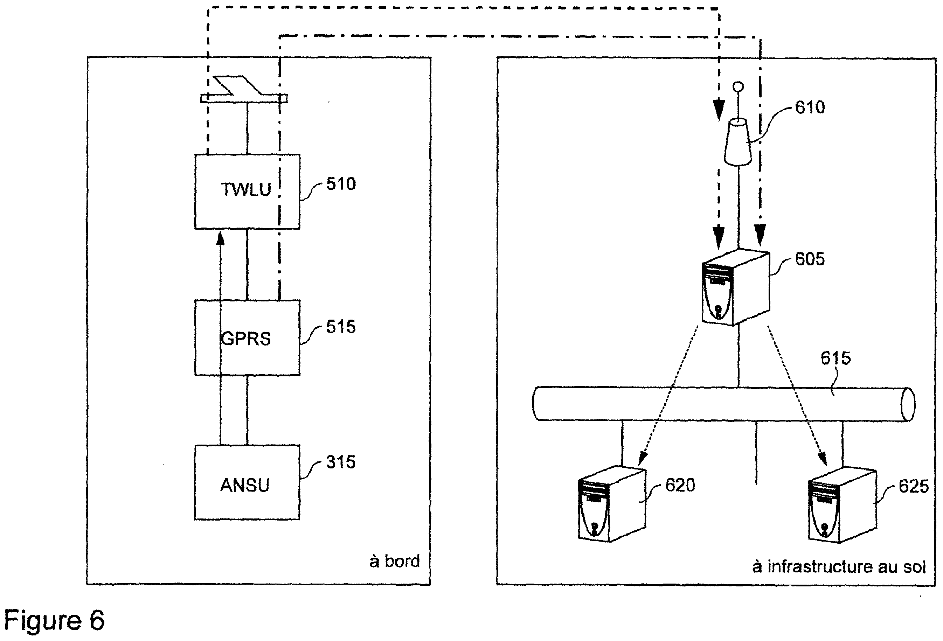

La figure 6 illustre un mode d'établissement de la communication entre un réseau d'ordinateurs formant au moins en partie l'infrastructure à bord d'un avion et le réseau d'ordinateurs formant au moins en partie l'infrastructure au sol de la compagnie aérienne, conformément à l'invention, basé sur l'architecture représentée en figure 5 comprenant une communication sans fil et une communication de téléphonie mobile.

Au sein de l'avion, tel que vu précédemment, sont présents dans l'avion, un serveur ANSU 315 et un serveur de liaison 320 comprenant, selon l'exemple, un module de communication sans fil TWLU 510 et un module de téléphonie mobile 515.

Concernant le réseau de la compagnie aérienne avec qui le serveur 310 de l'avion va communiquer, celui-ci comprend un serveur proxy 605 (traduction française de «*proxy serven»,* appelé aussi «*serveur mandataire*») de type RADIUS (« *Remote Authentication Dial-In User Service »* selon la terminologie anglo-saxonne) apte à recevoir et émettre via une antenne 610 des requêtes et des données.

Le serveur proxy est une machine faisant fonction d'intermédiaire entre les ordinateurs d'un réseau local de la compagnie aérienne et un second réseau, le réseau d'ordinateurs de l'avion.

Le serveur proxy 605 est connecté via un réseau local 615 à d'autres serveurs 620, 625 RADIUS. En effet, il est à noter que le serveur RADIUS peut faire office de proxy, c'est-à-dire transmettre les requêtes du client à d'autres serveurs RADIUS.

Un serveur RADIUS permet de faire la liaison entre des besoins d'identification et une base d'utilisateurs en assurant le transport des données d'authentification de façon normalisée.

Afin de réaliser des échanges de données entre le serveur de l'avion et le réseau local de la compagnie aérienne, le serveur ANSU 315 génère un certificat avion et le transmet au module de communication sans fil 510 via le module de téléphonie mobile 515 tel que vu précédemment.

Le module de communication sans fil 510 émet une requête au réseau local de la compagnie aérienne selon le protocole EAP - TLS (« Extensible Authentication Protocol - Transport Layer Security » selon la terminologie anglo-saxonne) afin d'échanger des certificats et ainsi créer un tunnel sécurisé entre le réseau de l'avion et le réseau local de la compagnie aérienne. Ce réseau ainsi créé est un réseau privé virtuel.

Pour ce faire, le protocole EAP - TLS utilise deux certificats pour la création d'un tunnel sécurisé qui permet ensuite l'identification : un côté serveur et un côté client.

Ce protocole utilise une infrastructure à clés publiques (« *Public Key Infrastructure* » en terminologie anglo-saxonne) pour sécuriser les communications d'identification entre les clients, à savoir les serveurs des avions de la compagnie aérienne et les serveurs RADIUS de la compagnie aérienne.

Ensuite, l'identification est réalisée, notamment par l'émission d'une requête de type DHCP (« Dynamic Host Configuration Protocol » selon la terminologie anglo-saxonne) au serveur proxy du réseau local de la compagnie aérienne 305 afin de l'informer de son identité.

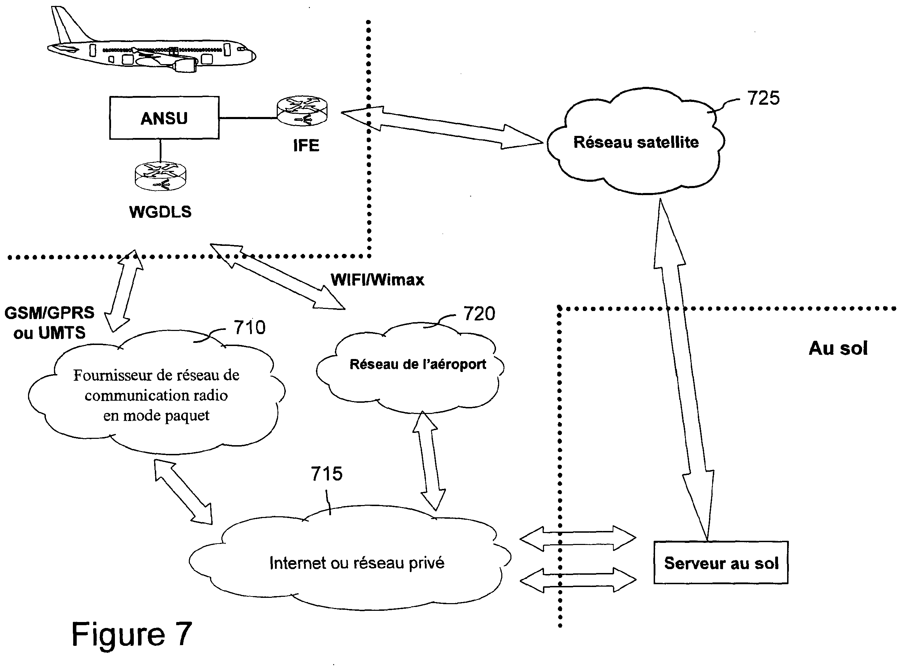

La figure 7 illustre différents réseaux privés virtuels aptes à être créés entre le réseau d'ordinateurs d'un avion et le réseau d'ordinateurs au sol, notamment le réseau de la compagnie aérienne.

Selon cette figure, il est illustré la création d'un réseau privé virtuel basé sur un support de communication de téléphonie mobile à savoir le réseau GSM / GPRS ou UMTS. Toutefois, tout type de réseau de téléphonie mobile peut servir de support de communication à un réseau privé virtuel selon l'invention.

Ce type de réseau privé virtuel permettant la communication d'un réseau d'ordinateurs d'un avion avec un réseau au sol est réalisé notamment via un fournisseur de réseau de communication radio en mode paquet 710 et le réseau Internet ou un réseau local privé 715.

En outre, il est illustré la création d'un réseau privé virtuel basé sur un support de communication sans fil 720, à savoir par exemple le réseau WIFI ou Wlmax, celui-ci étant notamment le réseau de l'aéroport. Ce réseau privé virtuel est également réalisé via le réseau Internet ou un réseau local privé 715.

De plus, un réseau privé virtuel peut être créé entre un réseau d'ordinateurs d'un avion et un réseau au sol lorsque l'avion est en vol notamment en utilisant une communication satellite 725.

Une fois ce réseau privé virtuel, les opérations de maintenance, de chargement, peuvent être exécutées par un technicien à bord ou au sol et bénéficier des dernières versions des manuels de procédures mémorisées dans l'infrastructure au sol.

En outre, il est possible de mettre à jour les outils et données mémorisés par les ordinateurs de l'avion de manière sécurisée.

## Revendications

1. Système de communication comprenant un réseau d'ordinateurs dans un aéronef et un réseau d'ordinateurs au sol, ledit système de communication comprenant en outre :
- un outil informatique partagé,
- des moyens aptes à établir une connexion réseau entre un réseau d'ordinateurs au sol et un réseau d'ordinateurs dans l'aéronef via au moins un support de communication selon un mode de communication synchrone, et
- des moyens de mise à jour des données mémorisées dans le réseau d'ordinateurs dans l'aéronef à partir de données mémorisées dans le réseau d'ordinateurs au sol ;
le mode de communication synchrone consistant à établir un canal de communication entre ledit réseau d'ordinateurs dans l'aéronef et ledit réseau d'ordinateurs au sol dédié à la communication entre eux, et permettant une navigation interactive dans des données mémorisées dans ledit réseau d'ordinateurs au sol, un opérateur dans l'aéronef étant apte à consulter des données mémorisées dans le réseau d'ordinateurs au sol,
l'outil informatique partagé effectuant une action de maintenance sur l'aéronef, l'action de maintenance incluant un test ou une consultation de la documentation avion, ledit test étant commandé par un opérateur au sol en vue d'identifier les entités remplaçables de l'aéronef dysfonctionnant,
ledit réseau d'ordinateurs dans l'aéronef étant un réseau apte à communiquer avec ledit réseau d'ordinateurs au sol, de manière à créer une continuité du réseau de l'aéronef avec le réseau d'ordinateurs au sol.

2. Système de communication selon la revendication 1, **caractérisé en ce qu'**il comprend des moyens d'émission de données mémorisées dans le réseau d'ordinateurs d'aéronef vers le réseau d'ordinateurs au sol.

3. Système de communication selon l'une quelconque des revendications précédentes, **caractérisé en ce qu'**au moins un support de communication est un réseau de téléphonie mobile.

4. Système de communication selon l'une quelconque des revendications 1 à 2, **caractérisé en ce qu'**au moins un support de communication est un réseau de communication sans fil.

5. Système de communication selon l'une quelconque des revendications précédentes, **caractérisé en ce qu'**au moins un support de communication est une liaison filaire.

6. Système de communication selon l'une quelconque des revendications précédentes, **caractérisé en ce que** le réseau d'ordinateurs dans l'aéronef et le réseau d'ordinateurs au sol sont connectés par un réseau privé virtuel.

7. Réseau d'ordinateurs d'aéronef, comprenant:
- un outil informatique partagé,
- des moyens aptes à établir une connexion réseau avec un réseau d'ordinateurs au sol via au moins un support de communication selon un mode de communication synchrone, et
- des moyens de mise à jour des données à partir de données mémorisées dans ledit réseau d'ordinateurs au sol ;
le mode de communication synchrone consistant à établir un canal de communication entre ledit réseau d'ordinateurs dans l'aéronef et ledit réseau d'ordinateurs au sol dédié à la communication entre eux, et permettant une navigation interactive dans des données mémorisées dans ledit réseau d'ordinateurs au sol, un opérateur dans l'aéronef étant apte à consulter des données mémorisées dans le réseau d'ordinateurs au sol,
l'outil informatique partagé effectuant une action de maintenance sur l'aéronef, l'action de maintenance incluant un test ou une consultation de la documentation avion, ledit test étant commandé par un opérateur au sol en vue d'identifier les entités remplaçables de l'aéronef dysfonctionnant,
ledit réseau d'ordinateurs dans l'aéronef étant un réseau apte à communiquer avec ledit réseau d'ordinateurs au sol, de manière à créer une continuité du réseau de l'aéronef avec le réseau d'ordinateurs au sol.

8. Réseau d'ordinateurs au sol, comprenant:
- un outil informatique partagé, et
- des moyens aptes à établir une connexion réseau avec un réseau d'ordinateurs d'un aéronef via au moins un support de communication selon un mode de communication synchrone ;
le mode de communication synchrone consistant à établir un canal de communication entre ledit réseau d'ordinateurs dans l'aéronef et ledit réseau d'ordinateurs au sol dédié à la communication entre eux, et permettant une navigation interactive dans des données mémorisées dans ledit réseau d'ordinateurs au sol, un opérateur dans l'aéronef étant apte à consulter des données mémorisées dans le réseau d'ordinateurs au sol,
l'outil informatique partagé effectuant une action de maintenance sur l'aéronef, l'action de maintenance incluant un test ou une consultation de la documentation avion, ledit test étant commandé par un opérateur au sol en vue d'identifier les entités remplaçables de l'aéronef dysfonctionnant,
ledit réseau d'ordinateurs dans l'aéronef étant un réseau apte à communiquer avec ledit réseau d'ordinateurs au sol, de manière à créer une continuité du réseau de l'aéronef avec le réseau d'ordinateurs au sol.

## Patentansprüche

1. Kommunikationssystem, das ein Computernetzwerk in einem Luftfahrzeug und ein Computernetzwerk am Boden enthält, wobei das Kommunikationssystem außerdem enthält:
- ein gemeinsam genutztes EDV-Tool,
- Einrichtungen, die eine Netzverbindung zwischen einem Computernetzwerk am Boden und einem Computernetzwerk im Luftfahrzeug über mindestens einen Kommunikationsträger gemäß einem synchronen Kommunikationsmodus aufbauen können, und
- Einrichtungen zur Aktualisierung der im Computernetzwerk im Luftfahrzeug gespeicherten Daten ausgehend vom Computernetzwerk am Boden;
wobei der synchrone Kommunikationsmodus darin besteht, einen Kommunikationskanal zwischen dem Computernetzwerk im Luftfahrzeug und dem Computernetzwerk am Boden aufzubauen, der der Kommunikation zwischen ihnen gewidmet ist, und eine interaktive Navigation in im Computernetzwerk am Boden gespeicherten Daten erlaubt, wobei ein Bediener im Luftfahrzeug im Computernetzwerk am Boden gespeicherte Daten abfragen kann,
wobei das gemeinsam genutzte EDV-Tool eine Wartungsaktion im Luftfahrzeug ausführt, wobei die Wartungsaktion einen Test oder eine Einsicht in die Flugzeugdokumentation umfasst, wobei der Test von einem Bediener am Boden gesteuert wird, um die austauschbaren Entitäten des nicht richtig funktionierenden Luftfahrzeugs zu erkennen,
wobei das Computernetzwerk im Luftfahrzeug ein Netzwerk ist, das mit dem Computernetzwerk am Boden kommunizieren kann, um eine Kontinuität des Netzwerks des Luftfahrzeugs mit dem Computernetzwerk am Boden zu erzeugen.

2. Kommunikationssystem nach Anspruch 1, **dadurch gekennzeichnet, dass** es Einrichtungen zum Senden von im Computernetzwerk des Luftfahrzeugs gespeicherten Daten zum Computernetzwerk am Boden enthält.

3. Kommunikationssystem nach einem der vorhergehenden Ansprüche, **dadurch gekennzeichnet, dass** mindestens ein Kommunikationsträger ein Mobiltelefonnetz ist.

4. Kommunikationssystem nach einem der Ansprüche 1 bis 2, **dadurch gekennzeichnet, dass** mindestens ein Kommunikationsträger ein drahtloses Kommunikationsnetz ist.

5. Kommunikationssystem nach einem der vorhergehenden Ansprüche, **dadurch gekennzeichnet, dass** mindestens ein Kommunikationsträger eine drahtgebundene Verbindung ist.

6. Kommunikationssystem nach einem der vorhergehenden Ansprüche, **dadurch gekennzeichnet, dass** das Computernetzwerk im Luftfahrzeug und das Computernetzwerk am Boden durch ein virtuelles privates Netzwerk verbunden sind.

7. Luftfahrzeug-Computernetzwerk, das enthält
- ein gemeinsam genutztes EDV-Tool,
- Einrichtungen, die eine Netzverbindung mit einem Computernetzwerk am Boden über mindestens einen Kommunikationsträger gemäß einem synchronen Kommunikationsmodus aufbauen können, und
- Einrichtungen zur Aktualisierung der Daten ausgehend von im Computernetzwerk am Boden gespeicherten Daten;
wobei der synchrone Kommunikationsmodus darin besteht, einen Kommunikationskanal zwischen dem Computernetzwerk im Luftfahrzeug und dem Computernetzwerk am Boden aufzubauen, der der Kommunikation zwischen ihnen gewidmet ist, und eine interaktive Navigation in im Computernetzwerk am Boden gespeicherten Daten erlaubt, wobei ein Bediener im Luftfahrzeug im Computernetzwerk am Boden gespeicherte Daten abfragen kann,
wobei das gemeinsam genutzte EDV-Tool eine Wartungsaktion am Luftfahrzeug durchführt, wobei die Wartungsaktion einen Test oder eine Einsicht in die Flugzeugdokumentation umfasst, wobei der Test von einem Bediener am Boden gesteuert wird, um die austauschbaren Entitäten des nicht richtig funktionierenden Luftfahrzeugs zu erkennen,
wobei das Computernetzwerk im Luftfahrzeug ein Netzwerk ist, das mit dem Computernetzwerk am Boden kommunizieren kann, um eine Kontinuität des Netzwerks des Luftfahrzeugs mit dem Computernetzwerk am Boden zu erzeugen.

8. Computernetzwerk am Boden, das enthält
- ein gemeinsam genutztes EDV-Tool, und
- Einrichtungen, die eine Netzverbindung mit einem Computernetzwerk eines Luftfahrzeugs über mindestens einen Kommunikationsträger gemäß einem synchronen Kommunikationsmodus aufbauen können;
wobei der synchrone Kommunikationsmodus darin besteht, einen Kommunikationskanal zwischen dem Computernetzwerk im Luftfahrzeug und dem Computernetzwerk am Boden aufzubauen, der der Kommunikation zwischen ihnen gewidmet ist, und eine interaktive Navigation in im Computernetzwerk am Boden gespeicherten Daten erlaubt, wobei ein Bediener im Luftfahrzeug im Computernetzwerk am Boden gespeicherte Daten abfragen kann,
wobei das gemeinsam genutzte EDV-Tool eine Wartungsaktion am Luftfahrzeug durchführt, wobei die Wartungsaktion einen Test oder eine Einsicht in die Flugzeugdokumentation umfasst, wobei der Test von einem Bediener am Boden gesteuert wird, um die austauschbaren Entitäten des nicht richtig funktionierenden Luftfahrzeugs zu erkennen,
wobei das Computernetzwerk im Luftfahrzeug ein Netzwerk ist, das mit dem Computernetzwerk am Boden kommunizieren kann, um eine Kontinuität des Netzwerks des Luftfahrzeugs mit dem Computernetzwerk am Boden zu erzeugen.

## Claims

1. Communication system comprising a network of computers in an aircraft and a network of computers on the ground, said communication system furthermore comprising:
- a shared computing tool,
- means able to establish a network connection between a network of computers on the ground and a network of computers in the aircraft via at least one communication facility according to a synchronous communication mode, and
- means for updating the data stored in the network of computers in the aircraft on the basis of data stored in the network of computers on the ground; the synchronous communication mode consisting in establishing a communication channel between said network of computers in the aircraft and said network of computers on the ground dedicated to communication between them, and allowing interactive navigation around data stored in said network of computers on the ground, an operator in the aircraft being able to consult data stored in the network of computers on the ground,
the shared computing tool performing a maintenance action on the aircraft, the maintenance action including a test or a consultation of the aircraft documentation, said test being ordered by an operator on the ground with a view to identifying the replaceable entities of the malfunctioning aircraft,
said network of computers in the aircraft being a network able to communicate with said network of computers on the ground, in such a way as to create a continuity of the network of the aircraft with the network of computers on the ground.

2. Communication system according to claim 1, **characterised in that** it comprises means for sending data stored in the network of aircraft computers to the network of computers on the ground.

3. Communication system according to any one of the preceding claims, **characterised in that** at least one communication facility is a mobile telephone network.

4. Communication system according to either one of claims 1 to 2, **characterised in that** at least one communication facility is a wireless communication network.

5. Communication system according to any one of the preceding claims, **characterised in that** at least one communication facility is a wired link.

6. Communication system according to any one of the preceding claims, **characterised in that** the network of computers in the aircraft and the network of computers on the ground are connected by a virtual private network.

7. Network of aircraft computers, comprising:
- a shared computing tool,
- means able to establish a network connection with a network of computers on the ground via at least one communication facility according to a synchronous communication mode, and
- means for updating the data on the basis of data stored in said network of computers on the ground;
the synchronous communication mode consisting in establishing a communication channel between said network of computers in the aircraft and said network of computers on the ground dedicated to communication between them, and allowing interactive navigation around data stored in said network of computers on the ground, an operator in the aircraft being able to consult data stored in the network of computers on the ground,
the shared computing tool performing a maintenance action on the aircraft, the maintenance action including a test or a consultation of the aircraft documentation, said test being ordered by an operator on the ground with a view to identifying the replaceable entities of the malfunctioning aircraft,
said network of computers in the aircraft being a network able to communicate with said network of computers on the ground, in such a way as to create a continuity of the network of the aircraft with the network of computers on the ground.

8. Network of computers on the ground, comprising:
- a shared computing tool, and
- means able to establish a network connection with a network of computers of an aircraft via at least one communication facility according to a synchronous communication mode;
the synchronous communication mode consisting in establishing a communication channel between said network of computers in the aircraft and said network of computers on the ground dedicated to communication between them, and allowing interactive navigation around data stored in said network of computers on the ground, an operator in the aircraft being able to consult data stored in the network of computers on the ground,
the shared computing tool performing a maintenance action on the aircraft, the maintenance action including a test or a consultation of the aircraft documentation, said test being ordered by an operator on the ground with a view to identifying the replaceable entities of the malfunctioning aircraft,
said network of computers in the aircraft being a network able to communicate with said network of computers on the ground, in such a way as to create a continuity of the network of the aircraft with the network of computers on the ground.
